# EUROPEAN PATENT APPLICATION

(11) **EP 4 184 806 A1**
(43) Date of publication of application: **24.05.2023**
(21) Application number: 21845991.5
(22) Date of filing: 24.06.2021
(51) Int. Cl.: H04B 7/185, H04L 12/437, H04L 45/28

(54) **COMMUNICATION METHOD FOR SATELLITE FORMATION, AND COMMUNICATION APPARATUS**

(30) Priority: 22.07.2020 CN 202010708887
(71) Applicant: Huawei Technologies Co., Ltd., Longgang Shenzhen, Guangdong 518129 (CN)
(72) Inventor: WANG, Bin, Shenzhen, Guangdong 518129 (CN); ZHANG, Ming, Shenzhen, Guangdong 518129 (CN); QIAO, Yunfei, Shenzhen, Guangdong 518129 (CN); SHI, Xueliang, Shenzhen, Guangdong 518129 (CN)
(74) Representative: Gill Jennings & Every LLP
(86) International application number: PCT/CN2021/101946
(87) International publication number: WO 2022/017114

(57) **Abstract**

This application provides a satellite formation communication method, applied to a satellite formation that has a closed bidirectional ring topology formed by sequentially connecting a plurality of satellites end-to-end. A complete formation loop detection method and a join and exit mechanism procedure are proposed based on this architecture, to implement flexibility and expandability of a satellite formation topology structure, and better improve overall performance of a communication system.

## Description

This application claims priority to Chinese Patent Application No. 202010708887.5, filed with the China National Intellectual Property Administration on July 22, 2020 and entitled "SATELLITE FORMATION COMMUNICATION METHOD AND COMMUNICATION APPARATUS", which is incorporated herein by reference in its entirety.

### TECHNICAL FIELD

This application relates to the communication field, and in particular, to a satellite formation communication method and a communication apparatus.

### BACKGROUND

In recent years, with development of a low-orbit satellite constellation technology, a broadband communication service and internet access or data transmission are provided to a user through a satellite without using a line provided by a telecommunication operator. The satellite internet is not limited by any terrain and region, and can implement global coverage of network access and signal transmission. A low-orbit satellite has advantages of a low delay, a high rate, and wide coverage, and can efficiently cover air, ocean, and remote regions, to form an effective supplement to a terrestrial network.

The low-orbit satellite has features of a small size, a light total weight, and low costs. However, compared with that of a terrestrial base station, a communication distance of a satellite communication system is extremely long. A conventional satellite-to-ground distance of the low-orbit satellite reaches hundreds of kilometers to thousands of kilometers, free space is greatly attenuated, and a capability of a single satellite antenna of receiving and sending an electromagnetic wave is insufficient. In addition, because a power supply capacity and a bearing weight of a single satellite are limited, the single satellite cannot further provide high-throughput communication service quality to a user, and spectral efficiency cannot be effectively improved.

### SUMMARY

This application provides a satellite formation communication method, which can be applied to a satellite formation that has a closed bidirectional ring topology formed by sequentially connecting a plurality of satellites end-to-end, to implement flexibility and expandability of a satellite formation topology structure, and better improve overall performance of a communication system.

According to a first aspect, a satellite formation communication method is provided, which is applied to a satellite formation including a plurality of satellites. The satellite formation includes a first satellite, and the method includes: The first satellite obtains a state of a first loop based on a first state mark table, where the first loop is a closed loop formed by sequentially connecting a plurality of satellites end-to-end through a bidirectional link, the first state mark table includes states of bidirectional links between each satellite in the first loop and two satellites adjacent to the satellite in the first loop, and the state of the first loop is one of the following: a bidirectional loop is available, a clockwise loop is available, and a counterclockwise loop is available. The first satellite performs communication in the first loop based on the state of the first loop.

In the foregoing technical solution, a bidirectional ring closed inter-satellite link topology formation manner is used, so that flexibility and expandability of the satellite formation are implemented. In addition, the solution supports a bidirectional communication structure, so that a ring topology has higher reliability, and an inter-satellite link relationship is easy to maintain: one satellite only needs to maintain upstream and downstream satellites related to the satellite.

With reference to the first aspect, in some implementations of the first aspect, that the first satellite performs communication in the first loop based on the state of the first loop includes: When the state of the first loop is that a bidirectional loop is available, the first satellite selects any direction of the bidirectional loop of the first loop to perform communication; or when the state of the first loop is that a clockwise loop is available or that a counterclockwise loop is available, the first satellite selects a loop direction supported by the first loop to perform communication.

With reference to the first aspect, in some implementations of the first aspect, the first satellite notifies, based on the state of the first loop, a satellite adjacent to the first satellite in the first loop of the state of the first loop.

With reference to the first aspect, in some implementations of the first aspect, the state of the first loop further includes: a bidirectional loop is unavailable.

With reference to the first aspect, in some implementations of the first aspect, when no bidirectional loop is available in the first loop, the first satellite performs communication in a second loop based on a second state mark table. A state of the second loop includes one of the following: a bidirectional loop is available, a clockwise loop is available, and a counterclockwise loop is available. The second loop is a closed loop that is available in at least one loop direction and that is formed by sequentially connecting, end-to-end, satellites remaining after at least one second satellite is deleted from the first loop. The second satellite is a satellite whose link state is "unavailable" in the first state mark table, and the second state mark table includes states of bidirectional links between each satellite in the second loop and two satellites adjacent to the satellite in the second loop.

In the foregoing technical solution, a loop satellite exit mechanism is provided based on a ring topology architecture, to better meet an indicator requirement of multi-satellite joint data transmission and improve overall performance of a communication system.

With reference to the first aspect, in some implementations of the first aspect, the first satellite notifies at least one other satellite in the first loop that the at least one second satellite exits from the first loop.

With reference to the first aspect, in some implementations of the first aspect, when the second satellite is a satellite whose link state is "unavailable" in the first state table, before the first satellite performs communication in the second loop based on the second state mark table, the method further includes: The first satellite updates a relationship that is between two satellites adjacent to the second satellite and that is in the first state mark table to a new direct adjacent relationship. The first satellite updates a connection state that is between the two satellites adjacent to the second satellite and that is in the first state mark table, and deletes the second satellite, to obtain the second state mark table.

In the foregoing technical solution, a mechanism for a satellite node to actively exit from a loop is provided based on a ring topology architecture, to better meet an indicator requirement of multi-satellite joint data transmission and improve overall performance of a communication system.

With reference to the first aspect, in some implementations of the first aspect, when the first satellite is a satellite that needs to exit from the first loop, the first satellite updates, to an unavailable state, a state that is of a bidirectional link between the first satellite and each of two satellites adjacent to the first satellite in the first loop and that is in the first state mark table.

With reference to the first aspect, in some implementations of the first aspect, the first satellite sends a first request message to a third satellite, where the first request message is used to request the third satellite to access the first loop, and the third satellite is a satellite meeting a lowest capability requirement for joining the first loop. The first satellite receives a first response message sent by the third satellite, where the first response message is used to indicate that the third satellite agrees to join the first loop. The first satellite indicates two adjacent satellites at a location at which the third satellite joins the first loop to disconnect from each other and separately establish a connection to the third satellite. The first satellite adds the third satellite to the first state mark table, and updates the first state mark table based on the connection relationship established between the third satellite and each of the two disconnected satellites.

In the foregoing technical solution, a mechanism for adding a satellite node to a loop is provided based on a ring topology architecture, to better meet an indicator requirement of multi-satellite joint data transmission and improve overall performance of a communication system.

With reference to the first aspect, in some implementations of the first aspect, the first satellite notifies at least one other satellite in the first loop that the third satellite joins the first loop.

With reference to the first aspect, in some implementations of the first aspect, before the first satellite sends the first request message to the third satellite, the method further includes: The first satellite queries an available satellite controlled by a control center of the satellite formation. The first satellite selects, based on a capability of the available satellite, the third satellite as a target satellite to join the first loop, where the capability includes one or more parameters in a quantity of links, a quantity of antennas, a quantity of beams, a frequency band, a power level, a bandwidth, load, and available time that are supported by the satellite.

According to a second aspect, a satellite formation communication method is provided, which is applied to a satellite formation including a plurality of satellites. The satellite formation includes a first satellite, and the method includes: A third satellite receives a first request message sent by the first satellite, where the first request message is used to request the third satellite to access a first loop, and the first loop is a closed loop formed by sequentially connecting a plurality of satellites end-to-end through a bidirectional link. The third satellite sends a first response message to the first satellite, where the first response message is used to indicate that the third satellite agrees to join the first loop. The third satellite joins the first loop.

With reference to the second aspect, in some implementations of the second aspect, that the third satellite joins the first loop includes: The third satellite determining two adjacent satellites at a location at which the third satellite joins the first loop. The third satellite separately establishes a connection to the two adjacent satellites at the location at which the third satellite joins the first loop, where the two adjacent satellites are disconnected from each other before establishing a connection to the third satellite.

According to a third aspect, a satellite formation communication method is provided, which is applied to a satellite formation including a plurality of satellites. The satellite formation includes a first satellite, and the method includes: A third satellite sends a second request message to the first satellite in a first loop, where the second request message is used to request the third satellite to access the first loop, and the first loop is a closed loop formed by sequentially connecting a plurality of satellites end-to-end through a bidirectional link. The third satellite receives a second response message sent by the first satellite, where the second response message is used to indicate that the third satellite is allowed to join the first loop. The third satellite joins the first loop.

In the foregoing technical solution, a mechanism for a satellite node to actively join a loop is provided based on a ring topology architecture, to better meet an indicator requirement of multi-satellite joint data transmission and improve overall performance of a communication system.

With reference to the third aspect, in some implementations of the third aspect, the third satellite determines two adjacent satellites at a location at which the third satellite joins the first loop. The third satellite establishes a connection to the two adjacent satellites at the location at which the third satellite joins the first loop, where the two adj acent satellites are disconnected from each other before establishing a connection to the third satellite.

According to a fourth aspect, a method for performing external reception correction on a satellite formation is provided. The method includes: A first satellite obtains a state of a first loop based on a first state mark table, where the first loop is a closed loop formed by connecting a plurality of satellites end-to-end through a bidirectional link, the first state mark table includes states of bidirectional links between each satellite in the first loop and two satellites adjacent to the satellite in the first loop, and the state of the first loop is a bidirectional loop, a unidirectional clockwise loop, or a unidirectional counterclockwise loop. The first satellite determines a direction of external correction on the first loop based on the state of the first loop. The first satellite sends a first reception correction reference signal to a second satellite, where the second satellite is a satellite adjacent to the first satellite in the direction of external correction on the first loop. The second satellite performs internal reception correction on a plurality of internal reception channels of the second satellite and stores an internal reception correction result, where the internal reception correction result includes calibration values of phases and/or amplitudes of the plurality of internal reception channels. Any of the plurality of internal reception channels of the second satellite obtains the first reception correction reference signal. The second satellite calculates an error between internal reception channels of the first satellite and the second satellite based on first reception correction reference information and the internal reception correction result, where the error includes a phase error and/or an amplitude error between the internal reception channels of the first satellite and the second satellite. The second satellite corrects and compensates for all the internal reception channels in the second satellite based on the error between the internal reception channels.

In the foregoing technical solution, a multi-satellite synchronization and multi-antenna correction method is provided based on a ring topology architecture, to better meet an indicator requirement of multi-satellite joint data transmission and improve overall performance of a communication system.

With reference to the fourth aspect, in some implementations of the fourth aspect, before any of the plurality of internal reception channels of the second satellite obtains the first reception correction reference signal, the method further includes: The second satellite receives the first reception correction reference signal. The second satellite corrects an inherent delay or a phase error of the first reception reference signal.

With reference to the fourth aspect, in some implementations of the fourth aspect, it is determined whether a third satellite is the first satellite, where the third satellite is a satellite adjacent to the second satellite in the direction of external correction on the first loop. When the third satellite is the first satellite, external correction on the first loop ends; or when the third satellite is not the first satellite, the second satellite sends a second reception correction reference signal to the third satellite. The third satellite performs internal reception correction on a plurality of internal reception channels of the third satellite and stores an internal reception correction result, where the internal reception correction result includes calibration values of phases and/or amplitudes of the plurality of channels. Any of the plurality of internal reception channels of the third satellite obtains the second reception correction reference signal. The third satellite calculates an error between internal reception channels of the second satellite and the third satellite based on reception correction reference information and the internal reception correction result. The third satellite corrects and compensates for all the internal reception channels in the third satellite based on the error.

According to a fifth aspect, a communication apparatus is provided. The communication apparatus has a function of implementing the method according to any one of the first aspect or the possible implementations of the first aspect. The function may be implemented by hardware, or may be implemented by hardware executing corresponding software. The hardware or the software includes one or more units corresponding to the foregoing function, for example, a processing unit.

According to a sixth aspect, this application provides a communication apparatus. The communication apparatus has a function of implementing the method according to any one of the second aspect or the possible implementations of the second aspect, or a function of implementing the method according to any one of the third aspect or the possible implementations of the third aspect. The function may be implemented by hardware, or may be implemented by executing corresponding software by hardware. The hardware or the software includes one or more units corresponding to the foregoing function, for example, a processing unit, a receiving unit, a sending unit, and the like.

According to a seventh aspect, this application provides a communication apparatus. The communication apparatus has a function of implementing the method according to any one of the fourth aspect or the possible implementations of the fourth aspect. The function may be implemented by hardware, or may be implemented by hardware executing corresponding software. The hardware or the software includes one or more units corresponding to the foregoing function, for example, a processing unit, a receiving unit, a sending unit, and the like.

According to an eighth aspect, this application provides a communication device, including at least one processor. The at least one processor is coupled to at least one memory. The at least one memory is configured to store a computer program or instructions, and the at least one processor is configured to invoke and run the computer program or instructions from the at least one memory, so that the communication device performs the method according to any one of the first aspect or the possible implementations of the first aspect.

In an example, the communication device may be a first satellite.

According to a ninth aspect, this application provides a communication device, including at least one processor. The at least one processor is coupled to at least one memory. The at least one memory is configured to store a computer program or instructions, and the at least one processor is configured to invoke and run the computer program or instructions from the at least one memory, so that the communication device performs the method according to any one of the second aspect or the possible implementations of the second aspect, or performs the method according to any one of the third aspect or the possible implementations of the third aspect.

In an example, the communication device may be a third satellite.

According to a tenth aspect, this application provides a communication device, including at least one processor. The at least one processor is coupled to at least one memory. The at least one memory is configured to store a computer program or instructions, and the at least one processor is configured to invoke and run the computer program or instructions from the at least one memory, so that the communication device performs the method according to any one of the fourth aspect or the possible implementations of the fourth aspect.

In an example, the communication device may be a first satellite.

According to an eleventh aspect, this application provides a computer-readable storage medium, and the computer-readable storage medium stores computer instructions. When the computer instructions are run on a computer, the method according to any one of the first aspect or the possible implementations of the first aspect is performed.

According to a twelfth aspect, this application provides a computer-readable storage medium, and the computer-readable storage medium stores computer instructions. When the computer instructions are run on a computer, the method according to any one of the second aspect or the possible implementations of the second aspect is performed, or the method according to any one of the third aspect or the possible implementations of the third aspect is performed.

According to a thirteenth aspect, this application provides a computer-readable storage medium, and the computer-readable storage medium stores computer instructions. When the computer instructions are run on a computer, the method according to any one of the fourth aspect or the possible implementations of the fourth aspect is performed.

According to a fourteenth aspect, this application provides a computer program product, and the computer program product includes computer program code. When the computer program code is run on a computer, the method according to any one of the first aspect or the possible implementations of the first aspect is performed.

According to a fifteenth aspect, this application provides a computer program product, and the computer program product includes computer program code. When the computer program code is run on a computer, the method according to any one of the second aspect or the possible implementations of the second aspect is performed, or the method according to any one of the third aspect or the possible implementations of the third aspect is performed.

According to a sixteenth aspect, this application provides a computer program product, and the computer program product includes computer program code. When the computer program code is run on a computer, the method according to any one of the fourth aspect or the possible implementations of the fourth aspect is performed.

According to a seventeenth aspect, this application provides a chip, including a processor and a communication interface. The communication interface is configured to receive a signal and transmit the signal to the processor. The processor processes the signal, so that the method according to any one of the first aspect or the possible implementations of the first aspect is performed.

According to an eighteenth aspect, this application provides a chip, including a processor and a communication interface. The communication interface is configured to receive a signal and transmit the signal to the processor. The processor processes the signal, so that the method according to any one of the second aspect or the possible implementations of the second aspect is performed, or the method according to any one of the third aspect or the possible implementations of the third aspect is performed.

According to a nineteenth aspect, this application provides a chip, including a processor and a communication interface. The communication interface is configured to receive a signal and transmit the signal to the processor. The processor processes the signal, so that the method according to any one of the fourth aspect or the possible implementations of the fourth aspect is performed.

According to a twentieth aspect, this application provides a satellite communication system, including the communication devices according to the eighth aspect and the ninth aspect.

### BRIEF DESCRIPTION OF DRAWINGS

FIG. 1 is a schematic diagram of a communication system applicable to an embodiment of this application;
(a) in FIG. 2 is a schematic diagram of a serial topology structure of a satellite formation;

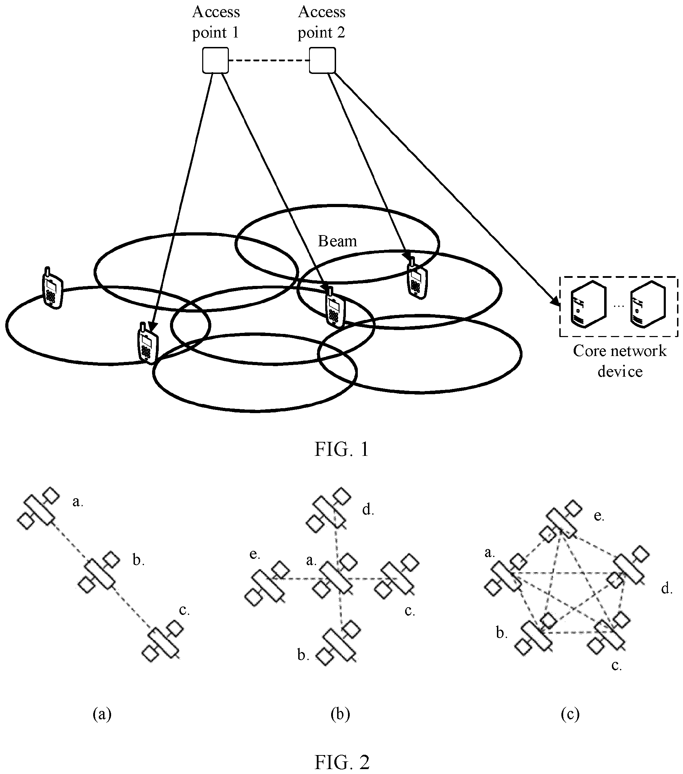

(b) in FIG. 2 is a schematic diagram of a star topology structure of a satellite formation;
(c) in FIG. 2 is a schematic diagram of a mesh topology structure of a satellite formation;

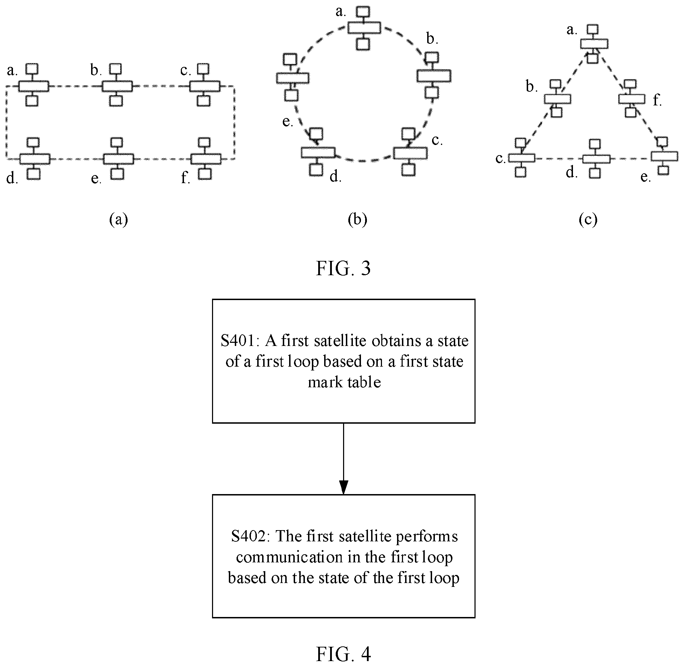

(a) in FIG. 3 is a schematic diagram of a satellite formation whose ring topology structure is a rectangle;
(b) in FIG. 3 is a schematic diagram of a satellite formation whose ring topology structure is a circle;
(c) in FIG. 3 is a schematic diagram of a satellite formation whose ring topology structure is a triangle;
FIG. 4 shows a satellite formation communication method according to this application;

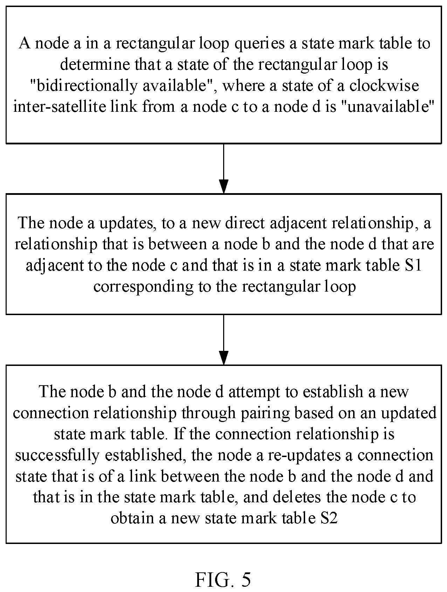

FIG. 5 is a schematic diagram of a procedure in which a damaged satellite node is actively deleted from a loop according to this application;

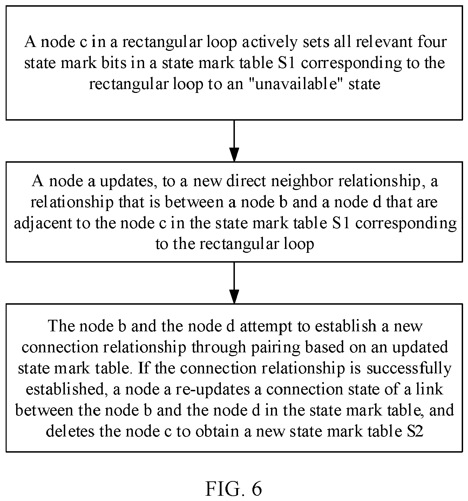

FIG. 6 is a schematic diagram of a procedure in which a satellite node actively exits from a loop according to this application;

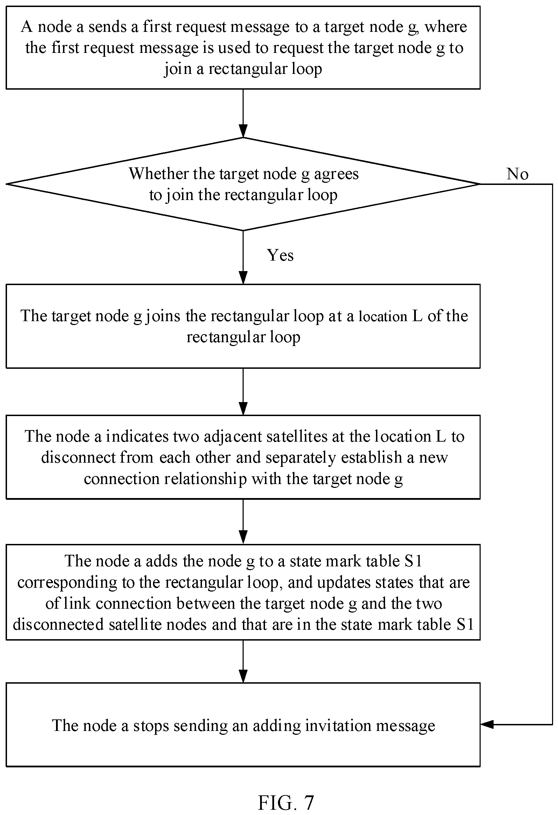

FIG. 7 is a schematic diagram of a procedure in which a satellite node is actively added to a loop according to this application;

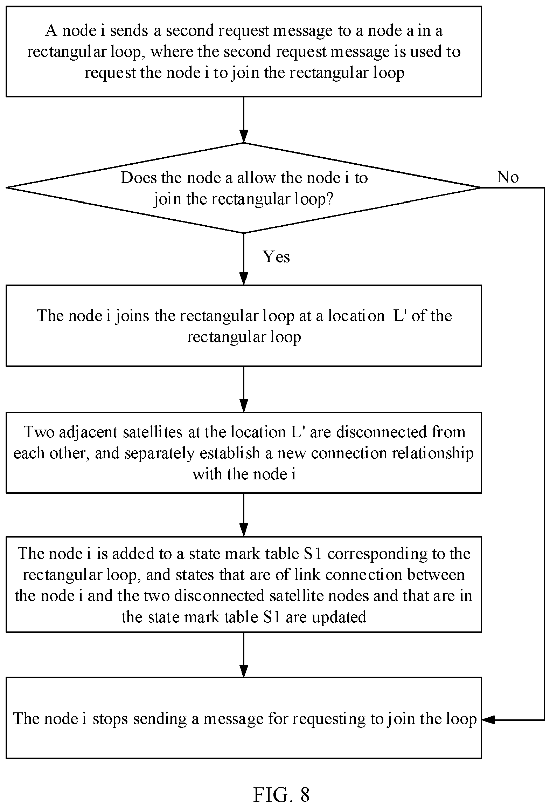

FIG. 8 is a schematic diagram of a procedure in which a satellite node is passively added to a loop according to this application;

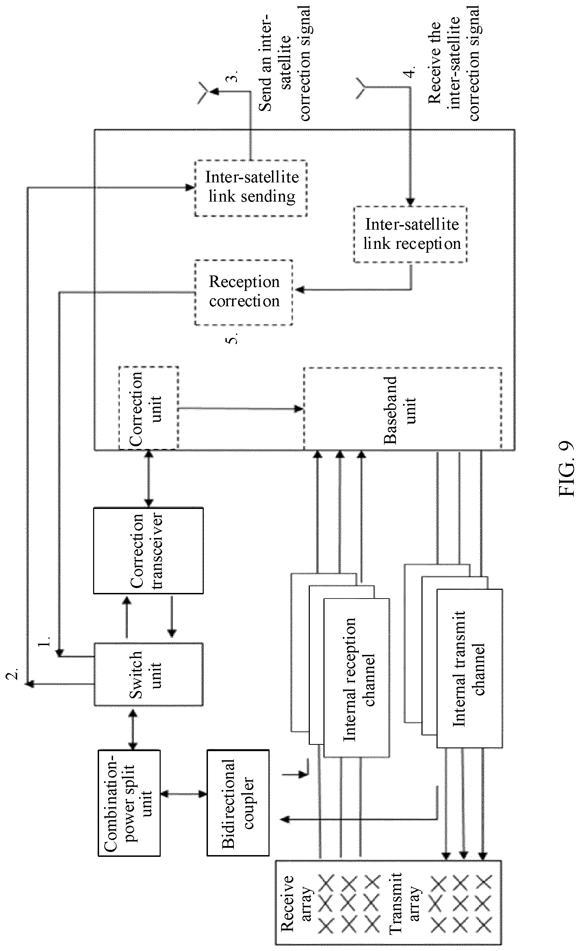

FIG. 9 is a block diagram of a structure of a satellite node that performs inter-satellite channel correction through a bidirectional ring inter-satellite link according to this application;

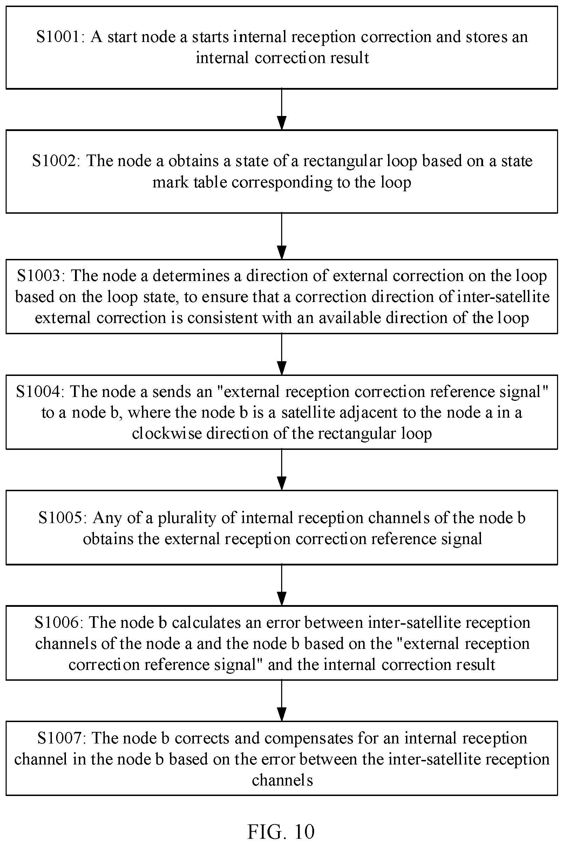

FIG. 10 is a schematic flowchart of a method for performing synchronous inter-satellite channel reception correction through a bidirectional ring inter-satellite link according to this application;

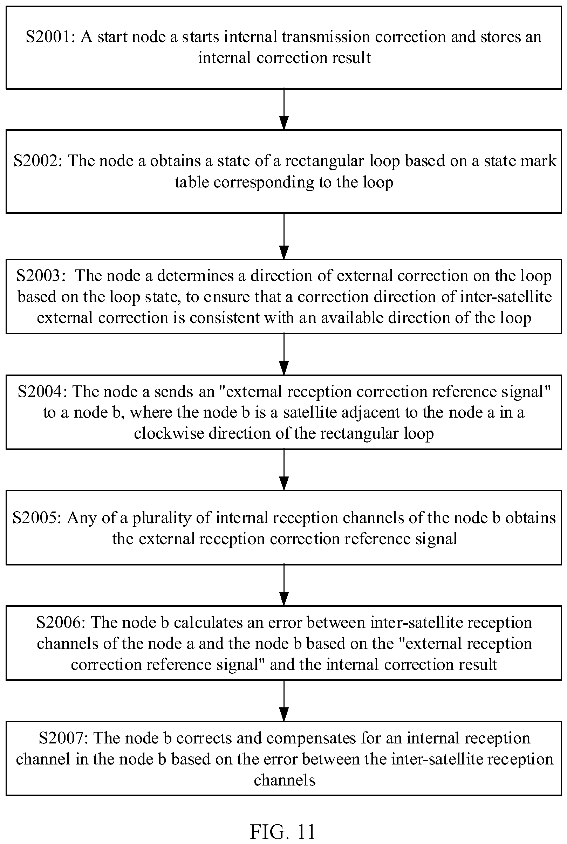

FIG. 11 is a schematic flowchart of a method for performing synchronous inter-satellite channel transmission correction through a bidirectional ring inter-satellite link according to this application;

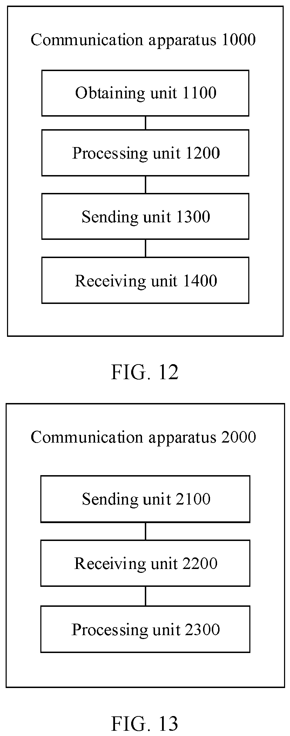

FIG. 12 is a schematic block diagram of a communication apparatus 1000 according to this application;
FIG. 13 is a schematic block diagram of a communication apparatus 2000 according to this application;

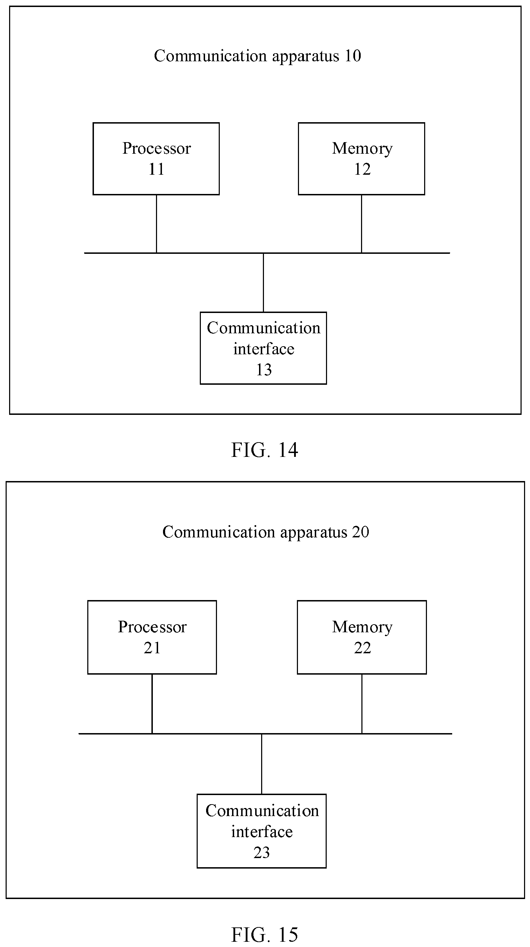

FIG. 14 is a schematic diagram of a structure of a communication apparatus 10 according to this application; and
FIG. 15 is a schematic diagram of a structure of a communication apparatus 20 according to this application.

### DESCRIPTION OF EMBODIMENTS

The following describes technical solutions of this application with reference to accompanying drawings.

The technical solutions of this application may be applied to a non-terrestrial network (non-terrestrial network, NTN) system such as a satellite communication system or high altitude platform station (high altitude platform station, HAPS) communication, for example, an ICaN system or a global navigation satellite system (global navigation satellite system, GNSS).

The satellite communication system may be integrated with a conventional mobile communication system. For example, the mobile communication system may be a fourth-generation (4th generation, 4G) communication system (for example, a Long Term Evolution (Long Term Evolution, LTE) system), a worldwide interoperability for microwave access (worldwide interoperability for microwave access, WiMAX) communication system, a fifth-generation (5th generation, 5G) communication system (for example, a new radio (new radio, NR) system), and a future mobile communication system.

FIG. 1 is a schematic diagram of a communication system applicable to an embodiment of this application. As shown in FIG. 1, an access point uses a plurality of beams to cover a service region, and different beams may perform communication through one or more of time division, frequency division, and space division. The access point provides communication and navigation services to a terminal device by broadcasting a communication signal and a navigation signal, and the access point accesses a core network device. The access point is not limited to a satellite base station or a terrestrial base station. The access point may be deployed on a high altitude platform station or a satellite. The satellite may be a non-geostationary earth orbit (non-geostationary earth orbit, NGEO) satellite or a geostationary earth orbit (geostationary earth orbit, GEO) satellite.

The access point may be an evolved NodeB (evolutional Node B, eNB or eNodeB) in LTE, a gNodeB in a 5G network or a future evolved public land mobile network (public land mobile network, PLMN), a broadband network service gateway (broadband network gateway, BNG), an aggregation switch, a non-3rd generation partnership project (3rd generation partnership project, 3GPP) access device, or the like. This is not specifically limited in embodiments of this application. Optionally, the base station in embodiments of this application may include various forms of base stations, such as a macro base station, a micro base station (also referred to as a small station), a relay station, an access point, a gNodeB (gNodeB, gNB), a baseband unit (baseband, BBU), a transmitting point (transmitting and receiving point, TRP), a transmitting point (transmitting point, TP), and a mobile switching center. This is not specifically limited in embodiments of this application. The satellite mentioned in embodiments of this application may be a satellite base station or a network-side device mounted on the satellite.

To facilitate understanding of embodiments of this application, terms in this application are first briefly described.
1. Distributed base station technology: In a distributed base station, a conventional macro base station device is divided into two functional modules based on a function. A baseband function, a main control function, a transmission function, a clock function, and the like of the base station are integrated on a module referred to as a baseband unit BBU. The baseband unit is small in size and has an extremely flexible installation location. Medium radio frequencies such as a transceiver and a power amplifier are integrated on another module referred to as a remote radio frequency module. A radio frequency unit (remote radio unit, RRU) is installed at an antenna end. The radio frequency unit and the baseband unit are connected through an optical fiber, to form a new distributed base station solution.
2. Coordinated multipoint transmission/reception (coordinated multiple points, CoMP): Coordinated multipoint transmission/reception is one of important technologies after subsequent evolution of the LTE technology (LTE-Advanced, LTE-A) starts. CoMP transmission/reception means that a plurality of transmission points that are geographically separated coordinately participate in data transmission of a terminal or jointly receive data sent by a terminal. The plurality of transmission points participating in coordination are usually base stations in different cells. In the CoMP technology, an edge user is placed at a same frequency of several base stations, and the several base stations simultaneously server the user, to improve coverage performance of the edge user. CoMP may be used to reduce inter-cell interference, and may be mainly used to improve spectral efficiency of a cell edge user.
3. Distributed satellite antenna synthesis: In the technology, an antenna array weighting algorithm is performed on a specific quantity of distributed antennas to obtain a desired synthesized antenna direction pattern, where the synthesized antenna direction pattern points to a specific communication point or region, and a synthesis gain of the synthesized antenna direction pattern is significantly higher than an antenna gain formed by a single antenna array, thereby improving a capability of receiving and sending an electromagnetic wave.
4. Communication satellite formation and coordination technology: The communication satellite formation and coordination technology is collection of a plurality of satellites working in coordination in a specific space range. A main purpose is to improve an overall capability of a satellite communication system through coordination of a plurality of satellites. Satellite coordination pays more attention to a structure function. To be specific, a plurality of satellites cooperate with each other to complete a task, and the plurality of satellites (two or more satellites) are distributed on one or more orbits based on a specific requirement, to jointly complete a space communication task through coordination, so that the communication system obtains a greater application value. Formation and networking are two main forms of a coordinated satellite system. Task functions of micro/nano satellites in formation and networking are completed by satellites flying in an entire formation, and an entire satellite group forms a big "virtual satellite". In this way, a function constraint of a single satellite is compensated for In addition, a huge and complex satellite is replaced with a light and flexible micro/nano satellite, which improves a scale and capability of an entire system at a larger degree. Moreover, synthesis of a same target region is implemented to obtain an extremely high antenna gain. The micro/nano satellites in formation and networking usually have a flexible joining and exiting mechanism, and have strong reconfigurability, redundancy, and reliability. Because the satellites work in coordination, a large amount of information is exchanged between the satellites. In addition, the satellites have extremely strong autonomy, thereby reducing dependence on a terrestrial station.

Referring to FIG. 2, (a) in FIG. 2 is a schematic diagram of a serial topology structure of a satellite formation, (b) in FIG. 2 is a schematic diagram of a star topology structure of a satellite formation, and (c) in FIG. 2 is a schematic diagram of a mesh topology structure of a satellite formation. As shown in FIG. 1, the satellite formation with the first type of serial topology structure is sequentially connected through an inter-satellite link. The satellite formation with the second type of star topology structure has a central node satellite, other satellites in the formation fly around based on the central satellite, and there is an inter-satellite link between the central node and each of the satellites fly around. The satellite formation with the third type of mesh topology structure has the following main features: There is no central node satellite, and a plurality of satellites form a mesh topology through an inter-satellite link between every two satellites.

In the first type of serial topology form, heads and tails of a plurality of satellites cannot form a closed loop. When a quantity of satellites is "N", each satellite needs to maintain a maximum of "two" inter-satellite links. Because the topology form cannot form a closed equivalent synthetic aperture effect, it is difficult to perform self-correction for synchronization between a plurality of satellites and inter-antenna correction between a plurality of satellites.

In the second type of star topology form, it is assumed that a quantity of satellite formations is N. In this case, in the topology form, the central node satellite needs to support "N-1" inter-satellite links, and there are "two" inter-satellite links between peripheral satellites. Synchronization and correction of multi-satellite antenna systems are aligned by using the central satellite. In addition, communication data between a plurality of satellites may be converged or forwarded by using the central node. However, reliability and redundancy of the topology structure are insufficient, which are excessively dependent on the central node satellite. When the central node is damaged, working of the entire satellite formation fails. Moreover, a requirement for the central node satellite is higher than that for another satellite, and the central node satellite needs to support all inter-satellite links from the central node to the peripheral satellites, limits a scale of satellites in the formation and affects expandability of the formation.

In the third type of mesh topology form, it is also assumed that a quantity of satellite formations is "N" . An inter-satellite link between every two satellites needs to be maintained, and each satellite needs to maintain "N-1" inter-satellite links, so that the mesh structure has highest reliability and redundancy. In addition, all other satellites can be calibrated by using any satellite, and data can be communicated between different satellites without using the central node, and can be forwarded by using any effective path in the mesh. However, the inter-satellite links in the topology are excessively complex. When the formation reaches a specific scale, because a maximum quantity of inter-satellite links supported by the satellite is limited, a joining and exiting mechanism for maintenance of the inter-satellite links in the formation is complex. In addition, the formation scale is also limited, and expandability is poor.

In view of this, this application proposes a new satellite formation topology structure, to avoid disadvantages of the existing topology structures, and implement flexibility and expandability of a satellite formation.

FIG. 3 is a schematic diagram of a satellite formation with a ring topology structure according to this application, where (a) in FIG. 3 is a schematic diagram of a satellite formation whose ring topology structure is a rectangle, (b) in FIG. 3 is a schematic diagram of a satellite formation whose ring topology structure is a circle, and (c) in FIG. 3 is a schematic diagram of a satellite formation whose ring topology structure is a triangle.

It should be understood that FIG. 3 provides three ring topology structures with different shapes as examples, and a specific shape of the ring topology structure is not limited in this application.

As shown in FIG. 3, main features of a satellite formation with a ring topology are as follows: Satellites in the satellite formation are sequentially connected end-to-end through a bidirectional inter-satellite link to form an inter-satellite link topology form including a regular closed ring topology (for example, the rectangle, the circle, or the triangle in FIG. 3) or an irregular closed ring topology. Each satellite base station supports at least two bidirectional inter-satellite links, and is connected to an upper-level satellite base station and a lower-level satellite base station that are adjacent to the satellite. In addition, each satellite needs to maintain two bidirectional inter-satellite links between the satellite and adjacent levels of satellites (or an upper-level satellite and a lower-level satellite) of the satellite. Any node satellite can loop back to an original start location through the closed loop. Assuming that M (M≥3) satellites form the loop, a quantity of inter-satellite links is also M.

The rectangular loop in (a) in FIG. 3 is used as an example. Any node satellite in the loop can access another node clockwise or counterclockwise through the loop and can return to the node through the loop. For example, a node a can loop back clockwise through an inter-satellite link a-b-c-d-e-f-a, and finally returns to the initial node a. To further improve reliability of the ring topology, the ring network has a bidirectional routing feature, and the node a can also loop back through an inter-satellite link a-f-e-d-c-b-a. In other words, a hierarchy relationship between every adjacent nodes in the link can be exchanged.

Optionally, to support the bidirectional routing feature of the ring topology structure, each node satellite in the loop periodically maintains, in a "state mark table" in a local storage unit, states of bidirectional links between the node satellite and satellites previously and subsequently adjacent to the node satellite. For example, the state of the inter-satellite link may be represented by a mark "Y" or "N", where the mark "Y" indicates that the link is "available", and the state "N" indicates that the link is "unavailable".

Assuming that the entire loop includes six satellite nodes (a node a to a node f), a state mark table in the ring topology is shown in Table 1, which indicates an available status of an inter-satellite link in the entire ring topology. The six satellite nodes have a total of 12 state mark bits in both directions, where "/" indicates that there is no link between nodes, and no maintenance is required. Likewise, assuming that there are M satellites for formation, there are at least M inter-satellite links, and the entire loop needs to maintain 2M state marks.

**Table 1**

| / | Node a | Node b | Node c | Node d | Node e | Node f |
|---|---|---|---|---|---|---|
| Node a | / | Y | / | / | / | Y |
| Node b | Y | / | Y | / | / | / |
| Node c | / | Y | / | Y | / | / |
| Node d | / | / | Y | / | Y | / |
| Node e | / | / | / | Y | / | Y |
| Node f | Y | / | / | / | Y | / |

Using the node a in Table 1 as an example, the node a needs to regularly maintain states of two bidirectional inter-satellite links between the node a and the node b and the node f, that is, a total of four mark states: a-b, b-a, a-f, f-a. Each satellite node can query the "state mark table" and access any target node satellite in the loop based on the state in the " state mark table".

In the satellite formation with the ring topology structure, a distributed antenna array is formed based on the topology, and a synthesized equivalent antenna gain pattern is formed by using a specific antenna weighting integration algorithm, to effectively improve a capability of transmitting/receiving an electromagnetic wave by the satellite in a specific region on the ground. Alternatively, a plurality of distributed base station systems formed based on the topology perform coordinated transmission in the region on the ground, and the bidirectional inter-satellite link carries an interface between distributed base stations, for example, an Xn interface between gNodeBs in 5G communication. Whether a distributed antenna synthesis array technology or a coordinated base station transmission technology is used, a capacity of communication between the satellite and a communication object is greatly increased, and spectral efficiency is improved.

The satellite formation with the ring topology structure is highly reliable, and an inter-satellite link relationship is easy to maintain: one satellite only needs to maintain upstream and downstream satellites associated with the satellite. This avoids that a distributed system cannot work due to a failure of a central node (it is difficult to repair the failure). The ring topology has a strong self-healing capability, and any satellite in the ring topology structure can serve as a data aggregation point, so that a formation scale can be theoretically expanded without a limitation, and a central aggregation point does not need to be connected to each remote node. However, in other topology structures, it is difficult to implement more than four inter-satellite link ports between satellites in engineering, and the formation scale is severely limited.

In addition, based on the foregoing ring topology structure, this application proposes a satellite formation detection mechanism and a mechanism for a satellite to join and exit from a satellite formation, to ensure that a ring closed loop rapidly and stably forms a new ring topology structure.

FIG. 4 shows a satellite formation communication method according to this application. The method is applied to a satellite formation including a plurality of satellites, and the satellite formation includes a first satellite.

S401: The first satellite obtains a state of a first loop based on a first state mark table.

The first loop is a closed loop formed by sequentially connecting the plurality of satellites end-to-end through a bidirectional inter-satellite link, and the first state mark table includes available statuses of bidirectional inter-satellite links between each satellite in the first loop and two satellites adjacent to the satellite in the first loop.

Specifically, when all inter-satellite link states in the first state mark table are "available" states, the state of the first loop is that a bidirectional loop is available, to be specific, a loop direction may be both a clockwise direction and a counterclockwise direction.

When at least one inter-satellite link state in the first state mark table is an "unavailable" state and unavailable link directions are the same, the state of the first loop is that a clockwise loop is available or that a counterclockwise loop is available. The rectangular loop in (a) in FIG. 3 is used as an example. It is assumed that a state of a link a-b and/or a state of a link c-d in a state mark table corresponding to the loop are/is an "unavailable" state, and other links have an "available" state. In this case, a loop in a clockwise direction a-b-c-d-e-f-a of the rectangular loop is unavailable, and an available loop direction is a counterclockwise direction a-f-e-d-c-b-a.

When at least two inter-satellite link states in the first state mark table are "unavailable" states and unavailable link directions include two different directions, the state of the first loop is that a bidirectional loop is unavailable. The rectangular loop in (a) in FIG. 3 is used as an example. It is assumed that states of a link a-b and a link e-d in the state mark table corresponding to the rectangular loop are "unavailable" states, and that other links have an "available" state. That the link a-b is unavailable causes a loop in a unidirectional clockwise direction of the rectangular loop to be unavailable, and that the link a-b is unavailable causes the loop in the unidirectional clockwise direction of the rectangular loop to be unavailable. Therefore, the rectangular loop is a loop that is bidirectionally unavailable.

S402: The first satellite performs communication in the first loop based on the state of the first loop.

In one implementation, when the state of the first loop is that a bidirectional loop is available, the first satellite selects any direction of the bidirectional loop of the first loop to perform communication.

Optionally, the first satellite notifies or broadcasts to at least one other satellite in the first loop that the state of the first loop is that a bidirectional loop is available.

In another implementation, when the state of the first loop is that a clockwise loop is available or that a counterclockwise loop is available, the first satellite selects a loop direction supported by the first loop to perform communication.

Optionally, the first satellite notifies or broadcasts to at least one other satellite in the first loop that the state of the first loop is that a clockwise loop is available or that a counterclockwise loop is available.

In still another implementation, when the state of the first loop is "bidirectionally unavailable", the first satellite cannot perform communication in the first loop, and a damaged satellite in the first loop needs to be deleted to ensure that at least one loop direction in the first loop is available.

Optionally, the first satellite notifies or broadcasts to at least one other satellite in the first loop that the state of the first loop is "bidirectionally unavailable".

It should be noted that there may be a plurality of damaged satellite nodes (that is, examples of a second satellite, where the damaged satellite nodes are satellites whose link states are "unavailable" in the first state mark table) in the first loop. In this application, all of the damaged satellite nodes may be deleted, or only some of the damaged satellite nodes may be deleted. The remaining satellite nodes are sequentially connected end-to-end to form a second loop. The second loop is a closed loop available in at least one loop direction. To be specific, a state of the second loop may be one of the following: a bidirectional loop is available, a clockwise loop is available, and a counterclockwise loop is available.

FIG. 5 is a schematic diagram of a procedure in which a damaged satellite node is actively deleted from a loop according to this application. An example in which the rectangular loop in (a) in FIG. 3 is a first loop and a node a is a first satellite is used below.
(1) The node a queries a state mark table to determine that a state of the rectangular loop is "bidirectionally available". A state of a clockwise inter-satellite link from a node c to a node d is "unavailable", which indicates that a communication link of the node c (that is, an example of a second satellite) is abnormal.
(2) The node a updates, to a new direct adjacent relationship, a relationship that is between a node b and the node d that are adj acent to the node c and that is in the state mark table S 1 (that is, an example of a first state mark table) corresponding to the rectangular loop, and the node b and the node d attempt to establish a new connection relationship through pairing based on an updated state mark table.
(3) If the connection relationship is successfully established, the node a re-updates a connection state (that is, a state mark bit) that is of a link between the node b and the node d and that is in the "state mark table", and deletes the node c to obtain a new state mark table S2 (that is, an example of a second state mark table). Then, the node a performs, based on the new state mark table, communication in a closed loop (that is, an example of a second loop) obtained after the node c is deleted.

Optionally, the first satellite may further notify or broadcast to at least one other satellite node in the first loop that the node c exits from the rectangular loop.

It should be noted that in a bidirectionally unavailable loop, if there are a plurality of satellites whose links are abnormal, in this application, all damaged satellite nodes may be deleted, or only at least one satellite node with a problem may be deleted, provided that a new loop obtained after some satellite nodes with a problem are deleted is available in at least one direction, and there is no need to delete all satellites that have a problem and whose links are abnormal. To be specific, a state of the new loop may be one of the following: a bidirectional loop is available, a clockwise loop is available, and a counterclockwise loop is available. This is not specifically limited in this application.

Optionally, in this embodiment of this application, a terminal device may be notified of information about a satellite formation in which the first loop is located, or the terminal device may be notified of only information about a previous satellite and/or a subsequent satellite of the first satellite in the satellite formation, so that the terminal device can prepare, based on the information about the satellite formation, to perform an operation such as switching.

In another implementation, any satellite node in the first loop may actively exit from the first loop.

FIG. 6 is a schematic diagram of a procedure in which a satellite node actively exits from a loop according to this application.

That the rectangular loop in (a) in FIG. 3 is a first loop and a node c is a satellite node that actively exits is used as an example. The node c that actively exits actively sets, to "unavailable" states, all of four related state mark bits (that is, states of links b-c, c-b, c-d, and d-c) in a state mark table S1 (that is, an example of a first state mark table) corresponding to the rectangular loop (or sets all of the four related state mark bits to states "N"). A subsequent procedure in which the node c exits is the same as that described in FIG. 5, and details are not described herein again.

Optionally, the satellite node that actively exits may further notify or broadcast to another satellite node in the first loop that the satellite node exits from the first loop.

A synthetic aperture formed by the foregoing ring topology structure is more easily maintained in a stable plane, damage or exit of a satellite has minimum impact on a synthetic aperture gain (this is equivalent to a principle of a sparse antenna array).

After a satellite node in an original formation damages or actively exits, to maintain or enhance performance of the satellite formation, a satellite node needs to be added to the loop. The same as a loop node exit mode, adding a node to a loop also includes: a mode in which a node is actively added to a loop and a mode in which a node is passively added to a loop.

FIG. 7 is a schematic diagram of a procedure in which a satellite node is actively added to a loop according to this application. A process of actively adding a target node to a loop is described below by using the rectangular loop (that is, an example of a first loop) in (a) in FIG. 3 as an example.
(1) A node a (that is, an example of a first satellite) sends a first request message to a target node g (that is, an example of a third satellite node), where the first request message is used to request the target node g to join the rectangular loop.

Optionally, before the node a sends the first request message to the target node g, the method further includes: The node a queries available satellites in a control center of a satellite formation corresponding to the rectangular loop. The node a selects, based on capabilities of the available satellites, the node g as a target satellite to join the rectangular loop.

Optionally, a capability parameter of the satellite includes one or more parameters in a quantity of links, a quantity of antennas, a quantity of beams, a frequency band, a power level, a bandwidth, load, and available time that are supported by the available satellite. For example, a link of an added satellite in this application supports at least more than two connectable bidirectional inter-satellite links.

Optionally, before the node a sends the first request message to the target node g, the method further includes: The node a may further sort the available satellites based on the capabilities of the available satellites, and select, based on a sorting result, the node g as the target satellite to join the rectangular loop.

It should be understood that, assuming that the selected target node g is a satellite that does not meet a lowest capability requirement for joining the rectangular loop, all nodes arranged after the target node g also do not meet the lowest capability requirement for joining the rectangular loop. In this case, the rectangular loop stops sending an adding request message.

(2) The node a receives a first response message sent by the target node g, where the first response message is used to indicate that the target node g is not allowed to join the rectangular loop. When the target node g does not agree to join the rectangular loop, optionally, the node a selects, based on the sorting result, a next node h after the target node g as the target node to join the rectangular loop. If the node h meets the lowest capability requirement for joining the rectangular loop, the node a sends, to the node h, a message for requesting to join the rectangular loop.

(3) The node a receives a first response message sent by the target node g, where the first response message is used to indicate that the target node g is allowed to join the rectangular loop. When the target node g agrees to join the rectangular loop, the target node g joins the rectangular loop at a location L of the rectangular loop. The node a indicates two adjacent satellites at the location L to disconnect from each other and separately establish a new connection relationship with the target node g. If the connection relationship is successfully established, the node a adds the node g to a state mark table S1 corresponding to the rectangular loop, and updates states (that is, state mark bits) that are of link connection between the target node g and the two disconnected satellite nodes and that are in the state mark table S1.

Optionally, the location L may be an optimal joining location determined based on a relationship between a location of the target node g and a location of the rectangular loop, or may be another location in the rectangular loop. This is not specifically limited in this application.

Optionally, the node a may further notify or broadcast to another node in the rectangular loop that the node g joins the rectangular loop.

(4) When no node needs to be added to the rectangular loop or the target node g does not agree to join the loop, the node a stops sending an adding invitation message.

FIG. 8 is a schematic diagram of a procedure in which a satellite node is passively added to a loop according to this application. A process of passively adding a target node to a loop is described below by using the rectangular loop in (a) in FIG. 3 as an example.
(1) A node i (that is, a node that actively applies to join the loop) sends a second request message to a node a of the rectangular loop (that is, a target loop), where the second request message is used to request the node i to join the rectangular loop.

Optionally, before the node i sends the second request message to the rectangular loop, the method further includes: The node i queries all available loops in a control center, and the node i selects the rectangular loop as the target loop based on capabilities of the available loops.

Optionally, a capability parameter of the loop includes parameters such as a communication distance between the available loop and the node i, and available time.

Optionally, before the node i sends the second request message to the rectangular loop, the method further includes: The node i queries available loops in a control center, identifies a loop requirement, and sorts the available loops based on loop capabilities. The node i selects the rectangular loop as the target loop based on a sorting result. For example, the node i may select, based on the sorting result, a loop ranks first as the target loop for joining.

(2) The node i receives a second response message sent by the node a, where the second response message is used to indicate that the node i is not allowed to join the rectangular loop. When the node i is not allowed to join the rectangular loop, optionally, the node i selects another loop as the target loop based on the loop capabilities. If the node i meets a lowest capability requirement for joining the another loop, the node i sends, to the another loop, a message for requesting to join the loop.

(3) The node i receives a second response message sent by the node a, where the second response message is used to indicate that the node i is allowed to join the rectangular loop. When the node i is allowed to join the rectangular loop, the node i joins the rectangular loop at a location L' of the rectangular loop. Two adjacent satellites at the location L' are disconnected from each other, and separately establish a new connection relationship with the node i. If the connection relationship is successfully established, the node i is added to a state mark table S1 corresponding to the rectangular loop, and states (that is, state mark bits) that are of link connection between the node i and the two disconnected satellite nodes and that are in the state mark table S1 are updated.

Optionally, the location L' may be an optimal joining location determined based on a relationship between a location of the node i and a location of the rectangular loop, or may be another location in the rectangular loop. This is not specifically limited in this application.

Optionally, the node a may further notify or broadcast to another node in the rectangular loop that the node i joins the rectangular loop.

(4) After the node i joins the target loop, or when a capability of the node i does not meet a capability requirement for joining the rectangular loop, the node i stops sending a message for requesting to join the loop.

In addition, based on the foregoing ring topology architecture, this application further proposes a method for performing synchronous correction between a plurality of satellite nodes in a ring topology. The method is based on mutual correction between nodes inside a loop, and supports primary correction and backup correction that are respectively in a positive direction and a negative direction, thereby improving reliability. In addition, this can further ensure that synchronous correction between a plurality of satellites can be completed when communication can be performed in only one direction of the loop.

FIG. 9 is a block diagram of a structure of a satellite node that performs inter-satellite channel correction through a bidirectional ring inter-satellite link according to this application.

As shown in FIG. 9, a channel 1 is a channel through which a current node satellite receives a correction reference signal used for alignment with a channel of an upper-level node or a lower-level node of the current node satellite, and a channel 2 is a channel through which the current node satellite sends a correction reference signal used for alignment with the channel of the upper-level node or the lower-level node of the current node satellite. 3 and 4 respectively represent a transmit antenna unit and a receive antenna unit used for inter-satellite communication or a channel correction signal, and 5 is a reception correction module configured to correct an inherent delay, a phase offset, and the like caused by long-distance inter-satellite transmission. Other modules such as a bidirectional coupler, a combination-power split unit, a switch unit, a correction transceiver, a transmit/receive antenna array, a central processing unit (including a correction unit and a baseband unit in FIG. 9), and an inter-satellite link transmit/receive antenna all are internal modules of the current node satellite.

In a process of synchronous correction between a plurality of satellite nodes in a ring topology proposed in this application, two processes need to be performed: internal correction of a current node is first performed, and then inter-satellite external correction is performed. Internal correction of a satellite node and inter-satellite external correction both include reception correction and transmission correction.

In the following, the rectangular loop in (a) in FIG. 3 is used as an example to first describe internal reception correction of a satellite node and inter-satellite external reception correction.

FIG. 10 is a schematic flowchart of a method for performing inter-satellite channel reception synchronization correction through a bidirectional ring inter-satellite link according to this application.

S1001: A start node a (that is, an example of a first satellite) in the rectangular loop starts internal reception correction and stores an internal correction result.

Optionally, the node a may send an "internal reception correction reference signal" based on the correction transceiver shown in the block diagram in FIG. 9, and couple a same-source "internal reception correction reference signal" to a plurality of internal reception channels by using the power split unit and the bidirectional coupler unit. After receiving the internal reception correction reference signal, the plurality of reception channels send the internal reception correction reference signal to the baseband unit of the central processing unit, to perform amplitude correction and/or phase correction on the plurality of internal reception channels, and store calibration values of phases and/or amplitudes of the plurality of internal reception channels.

S1002: The node a obtains a state of the rectangular loop based on a state mark table corresponding to the loop.

The state of the loop includes one of the following: a bidirectional loop is available, a clockwise loop is available, and a counterclockwise loop is available. For how to obtain the loop state based on the state mark table, refer to the foregoing descriptions. Details are not described herein again.

S1003: The node a determines a direction of external correction on the loop based on the loop state, to ensure that a correction direction of inter-satellite external correction is consistent with an available direction of the loop.

As an example rather than a limitation, that the loop state is "a clockwise loop is available" is used as an example below for description.

S1004: The node a sends an "external reception correction reference signal" (that is, an example of a first correction reference signal) to a node b, where the node b is a satellite adjacent to the node a in a clockwise direction of the rectangular loop.

Specifically, based on a feature that a head and a tail of the loop are connected, a local correction transceiver of the satellite node a sends the "external reception correction reference signal". A switch unit of the node a switches to a channel 2, to send the "external reception correction reference signal" to a sending module and antenna on an inter-satellite link, and send the "external reception correction reference signal" to the lower-level node b in an inter-satellite connection to the node a.

S1005: Any of a plurality of internal reception channels of the node b obtains the external reception correction reference signal.

Optionally, before the internal channel of the node b receives the "external reception correction reference signal", the node b converts the received signal by using a receive antenna and a radio frequency module on an inter-satellite link, where the conversion includes but is not limited to frequency synchronization, frequency conversion, optical-to-electrical conversion, and the like. This specifically depends on a specific frequency band of an electromagnetic wave used on an inter-satellite link or conversion between a free space laser and an electrical signal.

Optionally, after being converted, the correction signal is sent to a "reception correction module", to remove an inherent phase error (or a delay error) introduced by long-distance inter-satellite link transmission.

The node b switches a switch unit to a channel 2, to send, by using a power splitter and a coupler, the recovered original "external reception correction reference signal" to any reception channel on which local internal correction is completed. Correspondingly, the internal reception channel receives the "external reception correction reference signal".

S1006: The node b calculates an error between the inter-satellite reception channels of the node a and the node b based on the "external reception correction reference signal" and the internal correction result, where the error includes a phase error and/or an amplitude error between the internal reception channels of the node a and the node b.

S1007: The node b corrects and compensates for the internal reception channel in the node b based on the error between the inter-satellite reception channels.

Afterwards, the node b, as a new node, continues to repeat the foregoing steps in the loop direction to complete external reception channel correction between the target node and an upper-level node or a lower-level node of the target node. Finally, after every two adjacent nodes are sequentially aligned, the "reception correction reference signal" is sent back to the initial satellite node a, so that inter-satellite external correction on a receiver of the rectangular loop is completed.

In the following, the rectangular loop in (a) in FIG. 3 is used as an example to describe internal transmission correction of a satellite node and inter-satellite external transmission correction.

FIG. 11 is a schematic flowchart of a method for performing inter-satellite channel transmission synchronization correction through a bidirectional ring inter-satellite link according to this application.

S2001: A start node a (that is, an example of a first satellite) in the rectangular loop starts internal transmission correction and stores an internal correction result.

Optionally, similar to a conventional method, as shown in FIG. 9, a plurality of transmission channels of the node a first sends an "internal transmission correction reference signal". The "internal transmission correction reference signal" is received by the public correction transceiver module by using the bidirectional coupler unit and the combination unit, and is sent to the correction unit of the central processing unit. After amplitude and phase correction is performed on the plurality of transmission channels of the node a, a calibration value is stored in the baseband unit.

S2002: The node a obtains a state of the rectangular loop based on a state mark table corresponding to the loop.

The state of the loop includes one of the following: a bidirectional loop is available, a clockwise loop is available, and a counterclockwise loop is available. For how to obtain the loop state based on the state mark table, refer to the foregoing descriptions. Details are not described herein again.

S2003: The node a determines a direction of external correction on the loop based on the loop state, to ensure that a correction direction of inter-satellite external correction is consistent with an available direction of the loop.

As an example rather than a limitation, that the loop state is "a clockwise loop is available" is used as an example below for description.

S2004: The node a sends an "external transmission correction reference signal" to a node b, where the node b is a satellite adjacent to the node a in a clockwise direction of the rectangular loop.

Specifically, based on a feature that a head and a tail of the loop are connected, "any channel of a transmitter" that is of the satellite node a and on which internal transmission correction is locally completed transmits the "external transmission correction reference signal", sends, by using a coupling unit, a combination unit, and a channel 2 of a switch unit, the "external transmission correction reference signal" to the node b in an inter-satellite connection to the current node.

A local correction transceiver of the satellite node a sends the "external reception correction reference signal". The switch unit of the node a switches to the channel 2, to send the "external reception correction reference signal" to a sending module and antenna on an inter-satellite link, and send the "external reception correction reference signal" to the node b adjacent to the node a on the inter-satellite link.

S2005: The node b obtains the "external transmission correction reference" by using a correction transceiver.

Optionally, before the correction transceiver of the node b receives the "external reception correction reference signal", the node b converts the received signal by using a receive antenna and a radio frequency module on an inter-satellite link, where the conversion includes but is not limited to frequency synchronization, frequency conversion, optical-to-electrical conversion, and the like. This specifically depends on a specific frequency band of an electromagnetic wave used on an inter-satellite link or conversion between a free space laser and an electrical signal.

Optionally, after being converted, the correction signal is sent to a "reception correction module", to remove an inherent phase error (or a delay error) introduced by long-distance inter-satellite link transmission.

The node b switches the switch unit to the channel 2, to send, by using a power splitter and a coupler, the recovered original "external transmission correction reference signal" to a "correction unit" after the "correction transceiver" receives the "external transmission correction reference signal".

S2006: The node b calculates an error between the inter-satellite transmission channels of the node a and the node b by comparing the "external transmission correction reference signal" with the locally stored internal correction result for the transmission channel, where the error includes a phase error and/or an amplitude error between the internal transmission channels of the node a and the node b.

S2007: The node b sends an error result to a "baseband module" based on the error between the inter-satellite transmission channels, to correct and compensate for the internal transmission channel in the node b.

Afterwards, the node b, as a new node, continues to repeat the foregoing steps in the loop direction to complete transmission channel correction between the target node and an upper-level node or a lower-level node of the target node. Finally, after every two adjacent nodes are sequentially aligned, the "transmission correction reference signal" is sent back to the initial satellite node a, so that inter-satellite external correction on a transmitter of the rectangular loop is completed.

The satellite formation communication method provided in this application is described in detail above, and a communication apparatus provided in this application is described below.

FIG. 12 is a schematic block diagram of a communication apparatus 1000 according to this application. As shown in FIG. 12, the communication apparatus 1000 includes an obtaining unit 1100 and a processing unit 1200.

The obtaining unit 1100 is configured to obtain a state of a first loop based on a first state mark table. The first loop is a closed loop formed by sequentially connecting a plurality of satellites end-to-end through a bidirectional link, the first state mark table includes states of bidirectional links between each satellite in the first loop and two satellites adjacent to the satellite in the first loop, and the state of the first loop is one of the following: a bidirectional loop is available, a clockwise loop is available, and a counterclockwise loop is available. The processing unit 1200 is configured to determine, based on the state of the first loop, that a first satellite performs communication in the first loop.

Optionally, when the state of the first loop is that a bidirectional loop is available, the processing unit 1200 is configured to select any direction of the bidirectional loop of the first loop to perform communication; or when the state of the first loop is that a clockwise loop is available or that a counterclockwise loop is available, the processing unit 1200 is configured to select a loop direction supported by the first loop to perform communication.

Optionally, the communication apparatus 1000 may further include a sending unit 1300 and a receiving unit 1400, which are respectively configured to perform a sending action and a receiving action performed by the first satellite.

Optionally, the sending unit 1300 is configured to notify, based on the state of the first loop, a satellite adjacent to the first satellite in the first loop of the state of the first loop.

Optionally, the state of the first loop further includes: a bidirectional loop is unavailable.

Optionally, when no bidirectional loop is available in the first loop, the processing unit 1200 is further configured to perform communication in a second loop based on a second state mark table. A state of the second loop includes one of the following: a bidirectional loop is available, a clockwise loop is available, and a counterclockwise loop is available. The second loop is a closed loop that is available in at least one loop direction and that is formed by sequentially connecting, end-to-end, satellites remaining after at least one second satellite is deleted from the first loop. The second satellite is a satellite whose link state is "unavailable" in the first state mark table, and the second state mark table includes states of bidirectional links between each satellite in the second loop and two satellites adjacent to the satellite in the second loop.

Optionally, the sending unit 1300 is further configured to notify at least one other satellite in the first loop that the at least one second satellite exits from the first loop.

Optionally, when the second satellite is a satellite whose link state is "unavailable" in the first state table, before the processing unit 1200 performs communication in the second loop based on the second state mark table, the processing unit 1200 is further configured to update a relationship that is between two satellites adjacent to the second satellite and that is in the first state mark table to a new direct adjacent relationship. The processing unit 1200 is further configured to: update a connection state that is between the two satellites adjacent to the second satellite and that is in the first state mark table, and delete the second satellite, to obtain the second state mark table.

Optionally, when the first satellite is a satellite that needs to exit from the first loop, the processing unit 1200 is further configured to update, to an unavailable state, a state that is of a bidirectional link between the first satellite and each of two satellites adjacent to the first satellite in the first loop and that is in the first state mark table.

Optionally, the sending unit 1300 is configured to send a first request message to a third satellite, where the first request message is used to request the third satellite to access the first loop, and the third satellite is a satellite meeting a lowest capability requirement for joining the first loop. The receiving unit 1400 is configured to receive a first response message sent by the third satellite, where the first response message is used to indicate that the third satellite agrees to join the first loop. The processing unit 1200 is further configured to indicate two adjacent satellites at a location at which the third satellite joins the first loop to disconnect from each other and separately establish a connection to the third satellite. The processing unit 1200 is further configured to: add the third satellite to the first state mark table, and update the first state mark table based on the connection relationship established between the third satellite and each of the two disconnected satellites.

Optionally, the sending unit 1300 is further configured to notify at least one other satellite in the first loop that the third satellite joins the first loop.

Optionally, before the sending unit 1300 sends the first request message to the third satellite, the processing unit 1200 is further configured to query an available satellite controlled by a control center of a satellite formation. The processing unit 1200 is further configured to select, based on a capability of the available satellite, the third satellite as a target satellite to join the first loop, where the capability includes one or more parameters in a quantity of links, a quantity of antennas, a quantity of beams, a frequency band, a power level, a bandwidth, load, and available time that are supported by the satellite.

Optionally, the sending unit 1300 and the receiving unit 1400 may be integrated as a transceiver unit, which has both a receiving function and a sending function. This is not limited herein.

In one implementation, the communication apparatus 1000 may be the first satellite in the method embodiment. In this implementation, the sending unit 1300 may be a transmitter and the receiving unit 1400 may be a receiver. The receiver and the transmitter may also be integrated as a transceiver. The processing unit 1200 may be a processing apparatus.

In another implementation, the communication apparatus 1000 may be a chip or an integrated circuit mounted in the first satellite. In this implementation, the sending unit 1300 and the receiving unit 1400 may be communication interfaces or interface circuits. For example, the sending unit 1300 is an output interface or an output circuit, and the receiving unit 1400 is an input interface or an input circuit. The processing unit 1200 may be a processing apparatus.

A function of the processing apparatus may be implemented by hardware, or may be implemented by executing corresponding software by hardware. For example, the processing apparatus may include a memory and a processor. The memory is configured to store a computer program, and the processor reads and executes the computer program stored in the memory, so that the communication apparatus 1000 performs operations and/or processing performed by the first satellite in the method embodiments. Optionally, the processing apparatus may include only a processor, and a memory configured to store a computer program is located outside the processing apparatus. The processor is connected to the memory by using a circuit/wire, to read and execute the computer program stored in the memory. For another example, the processing apparatus may be a chip or an integrated circuit.

FIG. 13 is a schematic block diagram of a communication apparatus 2000 according to this application. As shown in FIG. 13, the communication apparatus 2000 includes a sending unit 2100, a receiving unit 2200, and a processing unit 2300.

The receiving unit 2200 is configured to receive a first request message sent by a first satellite, where the first request message is used to request a third satellite to access a first loop, and the first loop is a closed loop formed by sequentially connecting a plurality of satellites end-to-end through a bidirectional link. The sending unit 2100 is configured to send a first response message to the first satellite, where the first response message is used to indicate that the third satellite agrees to join the first loop. The processing unit 2300 is configured to enable the third satellite to join the first loop.

Optionally, the processing unit is specifically configured to: determine two adjacent satellites at a location at which the third satellite joins the first loop, and separately establish a connection to the two adjacent satellites at the location at which the third satellite joins the first loop, where the two adjacent satellites are disconnected from each other before establishing a connection to the third satellite.

In some other solutions, the units of the communication apparatus 2000 are further configured to perform the following steps and/or operations.

The sending unit 2100 is configured to send a second request message to a first satellite in a first loop, where the second request message is used to request a third satellite equipped with the apparatus to access the first loop, and the first loop is a closed loop formed by sequentially connecting a plurality of satellites end-to-end through a bidirectional link. The receiving unit 2200 is configured to receive a second response message sent by the first loop, where the second response message is used to indicate that the third satellite is allowed to join the first loop. The processing unit 2300 is configured to: enable the third satellite to join the first loop, and separately establish a connection to two adjacent satellites at a location at which the third satellite joins the first loop, where the two adjacent satellites are disconnected from each other before establishing a connection to the third satellite.

Optionally, the processing unit 2300 is configured to: determine two adjacent satellites at a location at which the third satellite joins the first loop. The processing unit 2300 is configured to establish a connection between the third satellite and each of the two adjacent satellites at the location at which the third satellite joins the first loop, where the two adjacent satellites are disconnected from each other before establishing a connection to the third satellite.

Optionally, the sending unit 2100 and the receiving unit 2200 may be integrated as a transceiver unit, which has both a receiving function and a sending function. This is not limited herein.

In one implementation, the communication apparatus 2000 may be the first satellite in the method embodiment. In this implementation, the sending unit 2100 may be a transmitter and the receiving unit 2200 may be a receiver. The receiver and the transmitter may also be integrated as a transceiver. The processing unit 2300 may be a processing apparatus.

In another implementation, the communication apparatus 2000 may be a chip or an integrated circuit mounted in the first satellite. In this implementation, the sending unit 2100 and the receiving unit 2200 may be communication interfaces or interface circuits. For example, the sending unit 2100 is an output interface or an output circuit, and the receiving unit 2200 is an input interface or an input circuit. The processing unit 2300 may be a processing apparatus.

A function of the processing apparatus may be implemented by hardware, or may be implemented by executing corresponding software by hardware. For example, the processing apparatus may include a memory and a processor. The memory is configured to store a computer program, and the processor reads and executes the computer program stored in the memory, so that the communication apparatus 2000 performs operations and/or processing performed by the first satellite in the method embodiments. Optionally, the processing apparatus may include only a processor, and a memory configured to store a computer program is located outside the processing apparatus. The processor is connected to the memory by using a circuit/wire, to read and execute the computer program stored in the memory. For another example, the processing apparatus may be a chip or an integrated circuit.

FIG. 14 is a schematic diagram of a structure of a communication apparatus 10 according to this application. As shown in FIG. 14, the communication apparatus 10 includes one or more processors 11, one or more memories 12, and one or more communication interfaces 13. The processor 11 is configured to control the communication interface 13 to transmit and receive a signal. The memory 12 is configured to store a computer program. The processor 11 is configured to invoke the computer program from the memory 12 and run the computer program, so that procedures and/or operations performed by the first satellite in the method embodiments of this application are performed.

For example, the processor 11 may have functions of the obtaining unit 1100 and the processing unit 1200 shown in FIG. 12, and the communication interface 13 may have a function of the sending unit 1300 and/or a function of the receiving unit 1400 shown in FIG. 12. Specifically, the processor 11 may be configured to perform processing or operations performed by the first satellite in the foregoing method embodiment, and the communication interface 13 is configured to perform a sending action and/or a receiving action performed by the first satellite in the foregoing method embodiment.

In one implementation, the communication apparatus 10 may be the first satellite in the method embodiment. In this implementation, the communication interface 13 may be a transceiver. The transceiver may include a receiver and a transmitter.

Optionally, the processor 11 may be a baseband apparatus, and the communication interface 13 may be a radio frequency apparatus.

In another implementation, the communication apparatus 10 may be a chip mounted in the first satellite. In this implementation, the communication interface 13 may be an interface circuit or an input/output interface.

Optionally, the processor and the memory in each of the apparatus embodiments may be units physically independent of each other, or the memory may be integrated with the processor. This is not limited in this specification.

FIG. 15 is a schematic diagram of a structure of a communication apparatus 20 according to this application. As shown in FIG. 15, the communication apparatus 10 includes one or more processors 21, one or more memories 22, and one or more communication interfaces 23. The processor 21 is configured to control the communication interface 23 to transmit and receive a signal. The memory 22 is configured to store a computer program. The processor 21 is configured to invoke the computer program from the memory 22 and run the computer program, so that procedures and/or operations performed by the third satellite in the method embodiments of this application are performed.

For example, the processor 21 may have a function of the processing unit 2300 shown in FIG. 13, and the communication interface 23 may have a function of the sending unit 2100 and/or a function of the receiving unit 2200 shown in FIG. 13. Specifically, the processor 21 may be configured to perform processing or operations performed by the third satellite in the foregoing method embodiment, and the communication interface 23 is configured to perform a sending action and/or a receiving action performed by the third satellite in the foregoing method embodiment.

In one implementation, the communication apparatus 20 may be the third satellite in the method embodiment. In this implementation, the communication interface 23 may be a transceiver. The transceiver may include a receiver and a transmitter.

Optionally, the processor 21 may be a baseband apparatus, and the communication interface 23 may be a radio frequency apparatus.

In another implementation, the communication apparatus 20 may be a chip mounted in the third satellite. In this implementation, the communication interface 23 may be an interface circuit or an input/output interface.

Optionally, the processor and the memory in each of the apparatus embodiments may be units physically independent of each other, or the memory may be integrated with the processor. This is not limited in this specification.

This application further provides a computer-readable storage medium, and the computer-readable storage medium stores computer instructions. When the computer instructions are run on a computer, operations and/or procedures performed by the first satellite in the method embodiments of this application are performed.

This application further provides a computer-readable storage medium, and the computer-readable storage medium stores computer instructions. When the computer instructions are run on a computer, operations and/or procedures performed by the third satellite in the method embodiments of this application are performed.

This application further provides a computer program product, and the computer program product includes computer program code or instructions. When the computer program code or instructions are run on a computer, operations and/or procedures performed by the first satellite in the method embodiments of this application are performed.

This application further provides a computer program product, and the computer program product includes computer program code or instructions. When the computer program code or instructions are run on a computer, operations and/or procedures performed by the third satellite in the method embodiments of this application are performed.

This application further provides a chip, and the chip includes a processor. A memory configured to store a computer program is disposed independent of the chip. The processor is configured to execute the computer program stored in the memory, so that operations and/or processing performed by the first satellite in any method embodiment are performed.

Further, the chip may include a communication interface. The communication interface may be an input/output interface, an interface circuit, or the like. Further, the chip may include the memory.

This application further provides a chip, and the chip includes a processor. A memory configured to store a computer program is disposed independent of the chip. The processor is configured to execute the computer program stored in the memory, so that operations and/or processing performed by the third satellite in any method embodiment are performed.

Further, the chip may include a communication interface. The communication interface may be an input/output interface, an interface circuit, or the like. Further, the chip may include the memory.

In addition, this application further provides a communication system, including the first satellite and the third satellite in embodiments of this application.

The processor in embodiments of this application may be an integrated circuit chip and has a capability of processing a signal. In an implementation process, steps in the foregoing method embodiments may be implemented by using a hardware integrated logic circuit in the processor, or by using instructions in a form of software. The processor may be a general-purpose processor, a digital signal processor (Digital Signal Processor, DSP), an application-specific integrated circuit (application-specific integrated circuit), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. As an example description rather than a limitative description, many forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), synchlink dynamic random access memory (synchlink DRAM, SLDRAM), and a direct rambus random access memory (direct rambus RAM, DRRAM). It should be noted that the memory in the systems and methods described in this specification includes but is not limited to these and any memory of another appropriate type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The term "and/or" in this specification describes only an association relationship between associated objects and represents that three relationships may exist. For example, A and/or B may represent the following three cases: Only A exists, both A and B exist, and only B exists. A, B, and C may all be singular or plural, and this is not limited.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite formation communication method, applied to a satellite formation comprising a plurality of satellites, wherein the satellite formation comprises a first satellite, and the method comprises:
obtaining, by the first satellite, a state of a first loop based on a first state mark table, wherein the first loop is a closed loop formed by sequentially connecting the plurality of satellites end-to-end through a bidirectional link, the first state mark table comprises states of bidirectional links between each satellite in the first loop and two satellites adjacent to the satellite in the first loop, and the state of the first loop is one of the following: a bidirectional loop is available, a clockwise loop is available, and a counterclockwise loop is available; and
performing, by the first satellite, communication in the first loop based on the state of the first loop.

2. The method according to claim 1, wherein the performing, by the first satellite, communication in the first loop based on the state of the first loop comprises:
when the state of the first loop is that a bidirectional loop is available, selecting, by the first satellite, any direction of the bidirectional loop of the first loop to perform communication; or
when the state of the first loop is that a clockwise loop is available or that a counterclockwise loop is available, selecting, by the first satellite, a loop direction supported by the first loop to perform communication.

3. The method according to claim 2, wherein the method further comprises:
notifying, by the first satellite based on the state of the first loop, a satellite adjacent to the first satellite in the first loop of the state of the first loop.

4. The method according to claim 1, wherein the state of the first loop further comprises: a bidirectional loop is unavailable.

5. The method according to claim 4, wherein the method further comprises:
when no bidirectional loop is available in the first loop, performing, by the first satellite, communication in a second loop based on a second state mark table, wherein a state of the second loop comprises one of the following: a bidirectional loop is available, a clockwise loop is available, and a counterclockwise loop is available; and
the second loop is a closed loop that is available in at least one loop direction and that is formed by sequentially connecting, end-to-end, satellites remaining after at least one second satellite is deleted from the first loop; and the second satellite is a satellite whose link state is "unavailable" in the first state mark table, and the second state mark table comprises states of bidirectional links between each satellite in the second loop and two satellites adjacent to the satellite in the second loop.

6. The method according to claim 5, wherein the method further comprises:
notifying, by the first satellite, at least one other satellite in the first loop that the at least one second satellite exits from the first loop.

7. The method according to claim 5 or 6, wherein when the second satellite is a satellite whose link state is "unavailable" in the first state table, before the performing, by the first satellite, communication in a second loop based on a second state mark table, the method further comprises:
updating, by the first satellite, a relationship that is between two satellites adjacent to the second satellite and that is in the first state mark table to a new direct adjacent relationship; and
updating, by the first satellite, a connection state that is between the two satellites adjacent to the second satellite and that is in the first state mark table, and deleting the second satellite, to obtain the second state mark table.

8. The method according to claim 1, wherein the method further comprises:
when the first satellite is a satellite that needs to exit from the first loop, updating, by the first satellite to an unavailable state, a state that is of a bidirectional link between the first satellite and each of two satellites adjacent to the first satellite in the first loop and that is in the first state mark table.

9. The method according to claim 1, wherein the method further comprises:
sending, by the first satellite, a first request message to a third satellite, wherein the first request message is used to request the third satellite to access the first loop, and the third satellite is a satellite meeting a lowest capability requirement for joining the first loop;
receiving, by the first satellite, a first response message sent by the third satellite, wherein the first response message is used to indicate that the third satellite agrees to join the first loop;
indicating, by the first satellite, two adjacent satellites at a location at which the third satellite joins the first loop to disconnect from each other and separately establish a connection to the third satellite; and
adding, by the first satellite, the third satellite to the first state mark table, and updating the first state mark table based on the connection relationship established between the third satellite and each of the two disconnected satellites.

10. The method according to claim 9, wherein the method further comprises:
notifying, by the first satellite, at least one other satellite in the first loop that the third satellite joins the first loop.

11. The method according to claim 9 or 10, wherein before the sending, by the first satellite, a first request message to a third satellite, the method further comprises:
querying, by the first satellite, an available satellite controlled by a control center of the satellite formation; and
selecting, by the first satellite based on a capability of the available satellite, the third satellite as a target satellite to join the first loop, wherein the capability comprises one or more parameters in a quantity of links, a quantity of antennas, a quantity of beams, a frequency band, a power level, a bandwidth, load, and available time that are supported by the satellite.

12. A satellite formation communication method, applied to a satellite formation comprising a plurality of satellites, wherein the satellite formation comprises a first satellite, and the method comprises:
receiving, by a third satellite, a first request message sent by the first satellite, wherein the first request message is used to request the third satellite to access a first loop, and
the first loop is a closed loop formed by sequentially connecting the plurality of satellites end-to-end through a bidirectional link;
sending, by the third satellite, a first response message to the first satellite, wherein the first response message is used to indicate that the third satellite agrees to join the first loop; and
joining, by the third satellite, the first loop.

13. The method according to claim 12, wherein the joining, by the third satellite, the first loop comprises:
determining, by the third satellite, two adjacent satellites at a location at which the third satellite joins the first loop; and
separately establishing, by the third satellite, a connection to the two adjacent satellites at the location at which the third satellite joins the first loop, wherein the two adjacent satellites are disconnected from each other before establishing a connection to the third satellite.

14. A satellite formation communication method, applied to a satellite formation comprising a plurality of satellites, wherein the satellite formation comprises a first satellite, and the method comprises:
sending, by a third satellite, a second request message to the first satellite in a first loop, wherein the second request message is used to request the third satellite to access the first loop, and
the first loop is a closed loop formed by sequentially connecting the plurality of satellites end-to-end through a bidirectional link;
receiving, by the third satellite, a second response message sent by the first satellite, wherein the second response message is used to indicate that the third satellite is allowed to join the first loop; and
joining, by the third satellite, the first loop.

15. The method according to claim 14, wherein the joining, by the third satellite, the first loop comprises:
determining, by the third satellite, two adjacent satellites at a location at which the third satellite joins the first loop; and
establishing, by the third satellite, a connection to the two adjacent satellites at the location at which the third satellite joins the first loop, wherein the two adjacent satellites are disconnected from each other before establishing a connection to the third satellite.

16. A communication apparatus, applied to a satellite formation comprising a plurality of satellites, wherein the satellite formation comprises a first satellite configured with the communication apparatus, and the communication apparatus comprises:
an obtaining unit, configured to obtain a state of a first loop based on a first state mark table, wherein the first loop is a closed loop formed by sequentially connecting the plurality of satellites end-to-end through a bidirectional link, the first state mark table comprises states of bidirectional links between each satellite in the first loop and two satellites adjacent to the satellite in the first loop, and the state of the first loop is one of the following: a bidirectional loop is available, a clockwise loop is available, and a counterclockwise loop is available; and
a processing unit, configured to determine, based on the state of the first loop, that the first satellite performs communication in the first loop.

17. The apparatus according to claim 16, wherein the processing unit is specifically configured to:
when the state of the first loop is that a bidirectional loop is available, select any direction of the bidirectional loop of the first loop to perform communication; or
when the state of the first loop is that a clockwise loop is available or that a counterclockwise loop is available, select a loop direction supported by the first loop to perform communication.

18. The apparatus according to claim 17, wherein the apparatus further comprises:
a sending unit, configured to notify, based on the state of the first loop, a satellite adjacent to the first satellite in the first loop of the state of the first loop.

19. The apparatus according to claim 16, wherein the state of the first loop further comprises: a bidirectional loop is unavailable.

20. The apparatus according to claim 19, wherein when no bidirectional loop is available in the first loop, the processing unit is further configured to perform communication in a second loop based on a second state mark table, wherein a state of the second loop comprises one of the following: a bidirectional loop is available, a clockwise loop is available, and a counterclockwise loop is available; and
the second loop is a closed loop that is available in at least one loop direction and that is formed by sequentially connecting, end-to-end, satellites remaining after at least one second satellite is deleted from the first loop; and the second satellite is a satellite whose link state is "unavailable" in the first state mark table, and the second state mark table comprises states of bidirectional links between each satellite in the second loop and two satellites adjacent to the satellite in the second loop.

21. The apparatus according to claim 20, wherein the sending unit is further configured to notify at least one other satellite in the first loop that the at least one second satellite exits from the first loop.

22. The apparatus according to claim 20 or 21, wherein when the second satellite is a satellite whose link state is "unavailable" in the first state table, before the processing unit performs communication in a second loop based on a second state mark table, the processing unit is further configured to update a relationship that is between two satellites adjacent to the second satellite and that is in the first state mark table to a new direct adjacent relationship; and
the processing unit is further configured to: update a connection state that is between the two satellites adjacent to the second satellite and that is in the first state mark table, and delete the second satellite, to obtain the second state mark table.

23. The apparatus according to claim 16, wherein when the first satellite is a satellite that needs to exit from the first loop, the processing unit is further configured to update, to an unavailable state, a state that is of a bidirectional link between the first satellite and each of two satellites adjacent to the first satellite in the first loop and that is in the first state mark table.

24. The apparatus according to claim 16, wherein the apparatus further comprises:
a sending unit, configured to send a first request message to a third satellite, wherein the first request message is used to request the third satellite to access the first loop, and the third satellite is a satellite meeting a lowest capability requirement for joining the first loop; and
a receiving unit, configured to receive a first response message sent by the third satellite, wherein the first response message is used to indicate that the third satellite agrees to join the first loop, wherein
the processing unit is further configured to indicate two adjacent satellites at a location at which the third satellite joins the first loop to disconnect from each other and separately establish a connection to the third satellite; and
the processing unit is further configured to: add the third satellite to the first state mark table, and update the first state mark table based on the connection relationship established between the third satellite and each of the two disconnected satellites.

25. The apparatus according to claim 24, wherein the sending unit is further configured to notify at least one other satellite in the first loop that the third satellite joins the first loop.

26. The apparatus according to claim 24 or 25, wherein before the sending unit sends the first request message to the third satellite,
the processing unit is further configured to query an available satellite controlled by a control center of the satellite formation; and
the processing unit is further configured to select, based on a capability of the available satellite, the third satellite as a target satellite to join the first loop, wherein the capability comprises one or more parameters in a quantity of links, a quantity of antennas, a quantity of beams, a frequency band, a power level, a bandwidth, load, and available time that are supported by the satellite.

27. A communication apparatus, applied to a satellite formation comprising a plurality of satellites, wherein the satellite formation comprises a first satellite, and the communication apparatus comprises:
a receiving unit, configured to receive a first request message sent by the first satellite, wherein the first request message is used to request a third satellite to access a first loop, and
the first loop is a closed loop formed by sequentially connecting the plurality of satellites end-to-end through a bidirectional link;
a sending unit, configured to send a first response message to the first satellite, wherein the first response message is used to indicate that the third satellite agrees to join the first loop; and
a processing unit, configured to add the third satellite to the first loop.

28. The apparatus according to claim 27, wherein the processing unit is specifically configured to:
determine two adjacent satellites at a location at which the third satellite joins the first loop; and
separately establish a connection to the two adjacent satellites at the location at which the third satellite joins the first loop, wherein the two adjacent satellites are disconnected from each other before establishing a connection to the third satellite.

29. A communication apparatus, applied to a satellite formation comprising a plurality of satellites, wherein the satellite formation comprises a first satellite, and the communication apparatus comprises:
a sending unit, configured to send a second request message to the first satellite in a first loop, wherein the second request message is used to request a third satellite configured with the apparatus to access the first loop, and
the first loop is a closed loop formed by sequentially connecting the plurality of satellites end-to-end through a bidirectional link;
a receiving unit, configured to receive a second response message sent by the first loop, wherein the second response message is used to indicate that the third satellite is allowed to join the first loop; and
a processing unit, configured to: add the third satellite to the first loop, and separately establish a connection to the two adjacent satellites at the location at which the third satellite joins the first loop, wherein the two adjacent satellites are disconnected from each other before establishing a connection to the third satellite.

30. The communication apparatus according to claim 29, wherein the processing unit is specifically configured to:
determine two adjacent satellites at a location at which the third satellite joins the first loop; and
establish a connection to the two adjacent satellites at the location at which the third satellite joins the first loop, wherein the two adjacent satellites are disconnected from each other before establishing a connection to the third satellite.

31. A communication apparatus, comprising at least one processor, wherein the at least one processor is coupled to at least one memory, and the at least one processor is configured to execute a computer program or instructions stored in the at least one memory, so that the communication apparatus implements the method according to any one of claims 1 to 11, or the communication apparatus implements the method according to any one of claims 12 to 15.

32. A computer-readable storage medium, wherein the computer-readable storage medium stores computer instructions; and when the computer instructions are run on a computer, the method according to any one of claims 1 to 11 is performed, or the method according to any one of claims 12 to 15 is performed.

33. A computer program product, wherein the computer program product comprises computer program code; and when the computer program code is run on a computer, the method according to any one of claims 1 to 11 is performed, or the method according to any one of claims 12 to 15 is performed.
